# FASCICULE DE BREVET EUROPEEN

(11) **EP 4 048 952 B1**
(45) Date de publication et mention de la délivrance du brevet: **03.04.2024**
(21) Numéro de dépôt: 20800046.3
(22) Date de dépôt: 23.10.2020
(51) Int. Cl.: F23M 5/02, F23M 5/08

(54) **TUILE REFRACTAIRE**
FEUERFESTE FLIESE
REFRACTORY TILE

(30) Priorité: 24.10.2019 FR 1911923
(43) Date de publication de la demande: 31.08.2022
(73) Titulaire: SAINT-GOBAIN CENTRE DE RECHERCHES ET D'ETUDES EUROPEEN, 92400 Courbevoie (FR)
(72) Inventeur: SAN-MIGUEL, Laurie, 84210 Althen des Paluds (FR); PINSON, Sébastien, 84220 Gordes (FR); MANN, Keith, Worcester, West Midlands WR5 3AR (GB); FISCHER, Benedikt, 96472 Rödental (DE); PFUETZE, Denis, 96472 Rödental (DE)
(74) Mandataire: Cabinet Nony
(86) Numéro de dépôt international: PCT/EP2020/079957
(87) Numéro de publication internationale: WO 2021/078974

(56) Documents cités:
- WO-A2-2007/137189
- DE-A1- 4 115 714
- DE-U1- 20 316 213

## Description

### Domaine technique

L'invention concerne une tuile réfractaire destinée à protéger un ou plusieurs des tubes disposés classiquement à l'intérieur de la chambre de combustion d'un four d'incinération d'ordures ménagères, de déchets ultimes de nature ou d'origine industrielle ou médicale, ou de biomasse afin de récupérer une partie de l'énergie calorifique produite.

L'invention concerne également un four, en particulier un four d'incinération d'ordures ménagères ou de biomasse, comportant une telle tuile.

### Technique antérieure

Les tubes de récupération d'énergie sont classiquement sensiblement verticaux et reliés entre eux par des barrettes transversales. Ils forment ensemble une paroi de tubes qui s'étend contre la paroi du four qui délimite la chambre de combustion. Le fluide caloporteur, classiquement de l'eau, qui circule dans les tubes récupère ainsi une partie de la chaleur dégagée pendant l'incinération.

Des tuiles formant un revêtement réfractaire protègent les tubes des contacts physiques avec les matériaux en cours de combustion et avec les fumées et cendres issues de cette combustion. De telles tuiles sont par exemple décrites dans EP 1 856 468. La faible épaisseur et la conductivité thermique élevée des tuiles permet de faciliter le transfert de la chaleur du réacteur à l'eau circulant dans les tubes.

Un contact étroit entre les tuiles et les tubes est également recherché. A cet effet, comme décrit par exemple dans EP 1 032 790, la face froide des tuiles présente classiquement plusieurs canaux hémicylindriques, ou « gorges », conformés pour recevoir chacun un tube de la paroi de tubes. Une fine couche de mortier liquide peut également être disposée derrière les tuiles afin de limiter le volume des espaces vides entre les tuiles et les tubes, et ainsi encore améliorer les échanges thermiques.

WO2007137189A2 décrit une tuile selon le préambule de la revendication 1. DE 203 16 213 et DE4115714A1 décrivent d'autres exemples de tuiles.

L'utilisation de tuiles flottantes accrochées à la paroi de tubes confère aux tuiles une certaine mobilité les unes par rapport aux autres. A cet effet, les tuiles peuvent par exemple être accrochées librement à des crochets fixés au milieu des barrettes et les tuiles peuvent être espacées les unes des autres de quelques millimètres. Le revêtement réfractaire peut ainsi s'adapter aux variations dimensionnelles des tuiles pendant les cycles thermiques. Un mat fibreux de quelques millimètres peut être également disposé entre les tuiles pour assurer une bonne étanchéité et accommoder les dilatations lors de la montée en température.

Les tuiles doivent assurer une protection des tubes en température, pendant une longue durée de service, tout en assurant un transfert de chaleur adapté. Un transfert trop élevé peut provoquer la génération de dioxines parmi les gaz émis par le four d'incinération. Un transfert trop faible nuit à l'efficacité de la récupération d'énergie et tend à générer des températures élevées en face chaude, favorisant les cinétiques de corrosion. La quantité de matière nécessaire à une tuile doit être enfin la plus faible possible afin de minimiser les coûts de fabrication tout en préservant la tenue thermomécanique.

La présente invention vise à répondre, au moins partiellement à ces besoins.

### Exposé de l'invention

### Résumé de l'invention

L'invention propose une tuile réfractaire destinée, dans une position de service, à protéger une paroi de tubes de récupération d'énergie garnissant intérieurement une chambre de combustion d'un four, de préférence d'un four d'incinération d'ordures ménagères ou de biomasse, ladite tuile présentant :
- une face destinée, dans ladite position de service, à être exposée à l'intérieur du four, dite « face chaude » ou « intrados » ;
- une face opposée à la face chaude, dite « face froide » ou « extrados », définissant :
   - une gorge s'étendant sur toute la longueur de la tuile et destinée, dans ladite position de service, à recevoir un dit tube, et
   - un logement de fixation configuré pour recevoir, dans ladite position de service, un ancrage, ou « organe de retenue », de manière à immobiliser la tuile par rapport audit tube, la tuile étant caractérisée en ce qu'elle présente, dans un plan de coupe transversal, au moins à chaque position entre la position de la gorge et la position du logement de fixation, une épaisseur de matière non nulle, l'épaisseur étant mesurée entre le profil transversal de la face chaude et un segment de droite, dit « base », reliant les extrémités du profil transversal de la face chaude, lesdites positions étant déterminées le long de ladite base.

Comme on le verra plus en détail dans la suite de la description, il en résulte un meilleur transfert thermique superficiel, qui favorise les échanges thermiques avec le fluide caloporteur circulant dans le tube, et un risque de fissuration réduit.

Sans être liés par cette théorie, les inventeurs expliquent ce résultat par l'absence d'augmentation significative de la température de la face chaude de la tuile, ni de la température au voisinage de l'ancrage.

Selon l'invention, l'épaisseur de matière diminue progressivement depuis la position du logement de fixation jusqu'à la position de la gorge. De préférence, l'épaisseur de matière diminue progressivement depuis la position du logement de fixation jusqu'à l'extrémité de la base de la tuile (du côté de la gorge).

Une épaisseur de matière au-dessus de la base n'est pas indispensable en dehors de la région comprise entre la position de la gorge et la position du logement de fixation. La tuile reste avantageusement peu encombrante et légère.

Une tuile selon l'invention peut encore comporter une ou plusieurs des caractéristiques optionnelles et préférées suivantes :
- à au moins une desdites positions de la gorge et du logement de fixation, de préférence à chacune desdites positions de la gorge et du logement de fixation, ladite épaisseur de matière est supérieure à 0,5 mm, de préférence supérieure à 5 mm, et/ou inférieure à 50 mm, de préférence inférieure à 30 mm, de préférence inférieure à 20 mm, de préférence inférieure à 15 mm ;
- de préférence, à la position du logement de fixation, ladite épaisseur de matière est supérieure à 0,5 mm, de préférence supérieure à 5 mm, et/ou inférieure à 50 mm, de préférence inférieure à 30 mm, de préférence inférieure à 20 mm, de préférence inférieure à 15 mm ;
- à au moins une desdites positions de la gorge et du logement de fixation, de préférence seulement à la position du logement de fixation, ladite épaisseur de matière est maximale ;
- la tuile présente une dite épaisseur de matière pour toute position sur un segment de ladite base représentant plus de 30%, de préférence plus de 40%, plus de 50%, plus de 70%, plus de 90%, de préférence sensiblement 100% de la longueur de la base ;
- ladite épaisseur de matière augmente lorsque la position, le long de la base, se rapproche de la position du logement de fixation ;
- ladite épaisseur de matière diminue lorsqu'on s'éloigne, en suivant la base, depuis la position du logement de fixation vers la position de la gorge ;
- ledit profil transversal évolue, le long de ladite base, sans rupture de pente ;
- ledit profil transversal est strictement convexe sur plus de 80%, de préférence plus de 90%, de préférence 100% de la largeur de la tuile ;
- la position, le long de la base, du milieu de la partie strictement convexe dudit profil transversal est de préférence la position dudit logement de fixation le long de la base ;
- ladite partie strictement convexe est symétrique par rapport à un axe perpendiculaire à ladite base et positionné à la position dudit logement de fixation ;
- la tuile comporte un unique logement de fixation ;
- la tuile comporte exactement deux gorges, s'étendant de part et d'autre d'un unique logement de fixation ;
- ledit profil transversal est symétrique par rapport au plan longitudinal médian de la tuile ;
- la face froide présente un biseau longitudinal le long d'au moins un, de préférence le long de chacun de ses bords longitudinaux, ce qui, avantageusement, réduit la quantité de matière utilisée ;
- le biseau longitudinal présente une portion plate, voire est plat, ce qui avantageusement allège la tuile et facilite la mise en place d'un mat de fibres ;
- la face froide présente un biseau transversal le long d'au moins un, de préférence le long de chacun de ses bords transversaux, ce qui avantageusement autorise une inclinaison de la tuile lors de son installation sur l'ancrage et facilite le remplissage de béton lors de la mise en place du revêtement ;
- ledit plan de coupe transversal peut être un plan de coupe transversal quelconque d'une fraction de la tuile comprise entre deux plans transversaux séparés d'une distance, le long de la direction de la longueur de la tuile, représentant plus de 50%, de préférence plus de 70%, plus de 90%, de préférence 100% de la longueur de la tuile, la longueur de la tuile étant définie par la direction générale de la gorge ;
- la face chaude présente, dans le plan longitudinal médian, de préférence dans tout plan longitudinal, un profil longitudinal configuré de manière que l'épaisseur de matière entre le plan de base de la face chaude et ledit profil longitudinal soit maximale à la position du plan transversal qui passe par la position du logement de fixation ;
- l'épaisseur de matière entre le plan de base de la face chaude et la face chaude est maximale à la position de l'ancrage, dans la position de service.

L'invention concerne également un four, en particulier un four d'incinération d'ordures ménagères ou de biomasse, comportant une chambre de combustion revêtue intérieurement de
- une pluralité de tubes de récupération d'énergie ; et
- un assemblage de tuiles réfractaires suspendues à des ancrages rigidement solidaires desdits tubes et agencées de manière à protéger lesdits tubes ;
ledit assemblage comportant une tuile selon l'invention, et étant de préférence constitué de plusieurs tuiles selon l'invention.

### Définitions

La « position de service » est la position dans laquelle la tuile est suspendue à l'intérieur de la chambre de combustion, de manière à séparer physiquement une portion d'au moins un tube d'un échangeur de chaleur, et l'intérieur de la chambre.

La direction de la longueur de la tuile est définie par la direction générale de la gorge. En position de service, cette direction est classiquement verticale. Un bord longitudinal est un bord qui s'étend selon la direction de la longueur.

La direction de la largeur de la tuile est définie par la direction perpendiculaire à la direction de la longueur, dans le plan général de la tuile. Un bord transversal est un bord qui s'étend selon la direction de la largeur.

L'épaisseur est mesurée perpendiculairement aux directions de la longueur et de la largeur.

Un plan longitudinal est un plan perpendiculaire à la direction de la largeur de la tuile.

Un profil longitudinal est un profil dans un plan longitudinal.

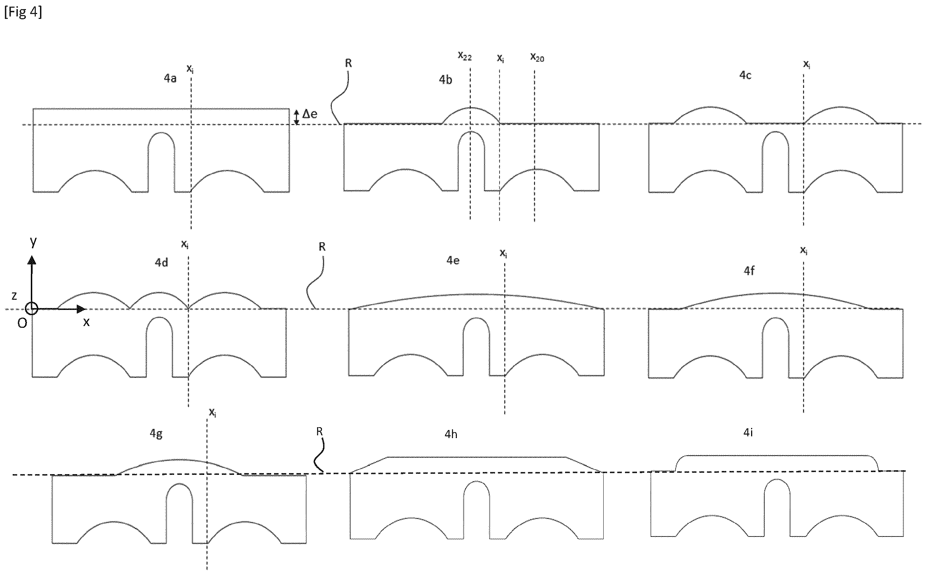

Les positions de la gorge et du logement de fixation le long de la base sont la position de la projection des centres de la gorge et du logement de fixation, respectivement, sur cette base, perpendiculairement à cette base. Dans un repère orthonormé Oxyz dans lequel l'axe des abscisses s'étendrait le long de la base, les positions de la gorge et du logement de fixation le long de ladite base sont donc les abscisses de leurs centres. Un exemple d'un tel repère a été représenté sur la figure 4d.

Plus généralement, toute position d'un objet le long de la base est la position de la projection du centre de cet objet sur cette base, perpendiculairement à cette base.

Le plan longitudinal médian est le plan longitudinal à mi-largeur de la tuile.

Un plan transversal est un plan perpendiculaire à la direction de la longueur de la tuile.

Un profil transversal est un profil dans un plan transversal.

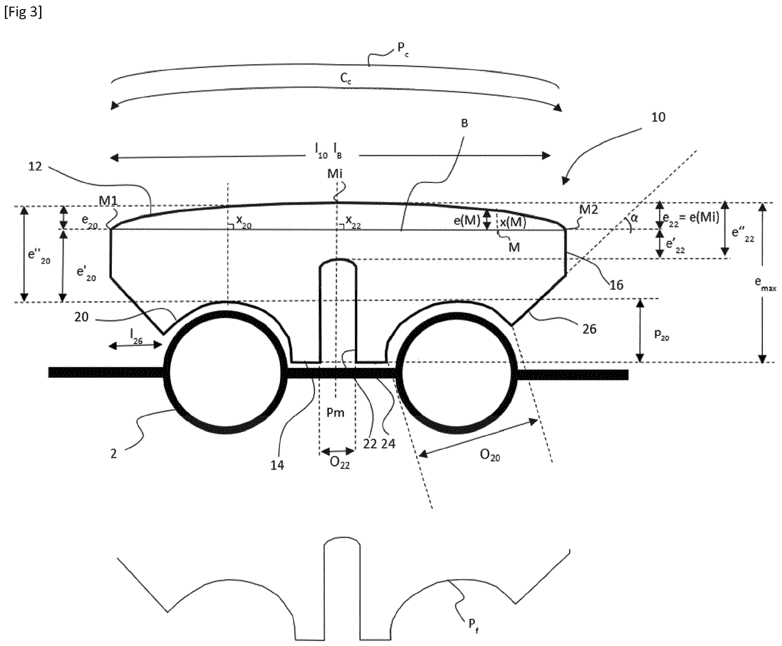

Les « extrémités » du profil transversal sont les points qui définissent les deux limites extrêmes, c'est-à-dire les bouts, de ce profil. La figure 3 montre par exemple les extrémités M1 et M2 du profil transversal de la face chaude.

Le plan transversal médian est le plan transversal à mi-longueur de la tuile.

Les adjectifs « chaud » et « froid » sont utilisés à des fins de clarté. Avant que le four ne soit en service, la face « chaude » est la face qui est destinée à être soumise aux températures les plus élevées après la mise en service. La face froide est la face qui est exposée vers l'extérieur de la chambre de combustion, c'est-à-dire vers les tubes.

Dans un plan transversal, on appelle « base » le segment de droite qui relie les extrémités du profil transversal de la face chaude.

Vues de face, les faces chaude et froide d'une tuile sont classiquement délimitées extérieurement par des contours respectifs, généralement sensiblement rectangulaires, qui s'étendent dans des plans, appelés « plans de base » des faces chaude et froide, respectivement.

Sauf mention contraire, toutes les teneurs en oxydes sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

Sauf mention contraire, les dimensions (épaisseur, largeur, longueur, diamètre) sont exprimées en mm.
« Comporter », « définir », « présenter » ou « comprendre » doivent être interprétés de manière large, non limitative.

### Brève description des dessins

D'autres caractéristiques et avantages de l'invention apparaîtront encore à la lecture de la description détaillée qui va suivre, non limitative, et à l'examen du dessin annexé dans lequel
- [Fig 1] la figure 1 représente schématiquement une tuile selon l'invention en perspective ;
- [Fig 2] la figure 2 représente schématiquement la tuile de la figure 1 vue de dessous ;
- [Fig 3] la figure 3 représente schématiquement la tuile de la figure 1 vue dans un plan de coupe transversal médian, en position de service ;
- [Fig 4] la figure 4 représente des profils transversaux de tuiles d'exemples comparatifs et non conformes à l'invention (4a à 4d, 4h et 4i) et d'exemples selon l'invention (4e à 4g) ;
- [Fig 5] la figure 5 représente schématiquement le dispositif de caractérisation utilisé pour les exemples ;
- [Fig 6] la figure 6 représente les profils transversaux de la figure 4, avec des informations dimensionnelles.

Dans les différentes figures, des références identiques ou analogues sont utilisées pour désigner des pièces ou des parties de pièce identiques ou analogues.

### Description détaillée

Dans un four, il est utile de récupérer une partie de l'énergie disponible dans la chambre de combustion. A cet effet, le four est classiquement équipé d'un échangeur de chaleur comportant une pluralité de tubes 2 disposés à l'intérieur de la chambre, classiquement contre la paroi de la chambre. Un fluide caloporteur, de préférence de l'eau, circule dans les tubes.

Un revêtement réfractaire protège les tubes 2 tout en permettant le transfert d'énergie calorifique vers le fluide caloporteur. Ce revêtement comporte une tuile 10 selon l'invention, de préférence est constitué de tuiles 10 selon l'invention.

La tuile 10 peut être en un matériau comportant au moins 60 %, de préférence au moins 90 %, de préférence encore au moins 99% d'oxydes non siliceux, en pourcentages en poids sur la base des oxydes. Par exemple, ces oxydes non siliceux sont choisis parmi l'alumine, la zircone, l'oxyde de chrome Cr₂O₃, l'oxyde d'hafnium (HfO₂) ou des mélanges de ceux-ci.

De préférence, en particulier pour les applications d'incinération, le matériau de la tuile selon l'invention comporte du carbure de silicium (SiC), de préférence est sensiblement constitué de SiC lié par une matrice liante de type oxyde telle que la mullite (3Al₂O₃,2SiO₂) ou l'alumine (Al₂O₃) ou d'une matrice liante nitrure telle que Si₃N₄, Si₂ON₂, voire SiAION. De préférence encore, il comporte moins de 2%, de préférence moins de 1% en poids de silicium métallique résiduel (Si) et/ou moins de 15% de silice (SiO₂). Le silicium et la silice sont en effet défavorables à la résistance à la corrosion.

De préférence, la tuile est en un matériau réfractaire fritté.

La tuile présente une longueur L₁₀ de préférence supérieure à 100 mm, de préférence supérieure à 150 mm et/ou inférieure à 500 mm, de préférence inférieure à 300 mm.

La tuile présente une largeur l₁₀ de préférence supérieure à 60 mm, de préférence supérieure à 100 mm et/ou inférieure à 500 mm, inférieure à 300 mm, de préférence inférieure à 200 mm.

La tuile présente une épaisseur hors tout eₘₐₓ de préférence supérieure à 20 mm, de préférence supérieure à 25 mm et/ou inférieure à 100 mm, inférieure 80 mm, de préférence inférieure à 60 mm.

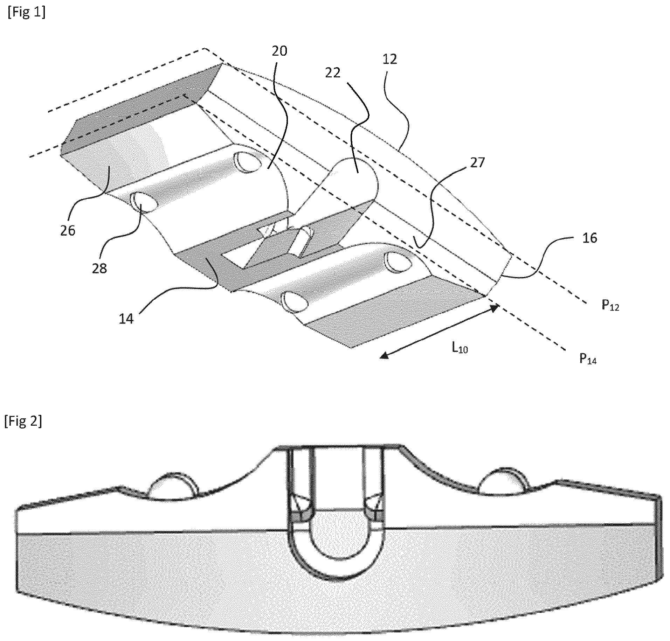

Les faces chaude 12 et froide 14 de la tuile 10 sont classiquement délimitées extérieurement par des contours respectifs, généralement sensiblement rectangulaires, qui s'étendent dans des plans, appelés « plans de base » P₁₂ et P₁₄, respectivement, classiquement sensiblement parallèles l'un à l'autre, représentés sur la figure 1. Ces contours, généralement rectangulaires, sont classiquement visibles lorsque ces faces chaude et froide sont observées de face, c'est-à-dire selon la direction de l'épaisseur.

Les faces froide et chaude sont reliées l'une à l'autre par des faces latérales 16 qui, dans la position de service, sont en regard de faces latérales de tuiles adjacentes. Dans le mode de réalisation de la figure 3, les faces latérales 16 sont sensiblement perpendiculaires au plan de base P₁₂.

La face froide 14 définit classiquement au moins une gorge 20, de préférence plus d'une gorge et de préférence moins de 5, de préférence deux, trois ou quatre gorges.

Chaque gorge présente de préférence une forme complémentaire à celle d'un tube 2 de l'échangeur thermique qu'elle est destinée à recevoir dans la position de service de la tuile, comme représenté sur la figure 3. Chaque gorge reçoit donc un unique tube. De préférence, elle présente une forme cylindrique, de base circulaire.

Les gorges 20 sont de préférence régulièrement espacées sur la largeur de la tuile 10.

La gorge 20 s'étend classiquement sur toute la longueur de la tuile 10. Elle présente de préférence une ouverture O₂₀ supérieure à 25 mm, de préférence supérieure à 35 mm et/ou inférieure à 100 mm, de préférence inférieure à 80 mm. Elle présente de préférence une profondeur p₂₀, mesurée selon la direction de l'épaisseur au point le plus proche de la base (à la position x₂₀), supérieure à 5 mm, de préférence supérieure à 10 mm et/ou inférieure à 70 mm, de préférence inférieure à 50 mm. Le rayon de courbure de la gorge est fonction du rayon du tube en regard, et de préférence compris entre 25 et 100 mm.

La face froide 14 définit classiquement au moins un logement de fixation 22, de préférence plus d'un logement de fixation et de préférence moins de 5, moins de 4, moins de 3 logements de fixation, de préférence un unique logement de fixation.

Chaque logement de fixation 22 est conformé pour coopérer avec un ancrage respectif, non représenté. Le poids de la tuile est classiquement supporté par une tuile inférieure sur laquelle la tuile repose. L'ancrage, ou « stud », est destiné à éviter le basculement de la tuile à l'écart des tubes. De préférence, il est configuré pour maintenir la tuile à une distance prédéterminée des tubes 2, de préférence supérieure à 4 mm, supérieure à 5 mm et/ou inférieure à 20 mm de préférence inférieure à 10 mm. L'espace ainsi ménagé entre la tuile et les tubes peut être comblé par un mortier ou non. L'ancrage présente classiquement la forme générale d'une tige filetée ou d'une vis ou d'un autre système de serrage.

Les ancrages sont rigidement solidaires du réseau de tubes 2, par exemple soudés à des barrettes ou à une plaque métallique 24 reliant les tubes. La présence de plusieurs encoches de fixation par tuile, de préférence deux, garantit avantageusement le maintien en position de la tuile en cas de défaillance d'un des ancrages. La présence d'une seule encoche est cependant préférée car elle confère une liberté de mouvement supérieure à la tuile et limite ainsi les contraintes lors de l'installation de la tuile et la montée en température du four.

Dans un plan de coupe transversal médian, la face froide 14 présente un profil transversal Pf, reporté sous la figure 3 pour plus de clarté. De préférence, le profil transversal de la face froide est le même quel que soit le plan de coupe transversal choisi dans une portion de la tuile s'étendant, entre deux plans transversaux, sur plus de 50%, plus de 70%, plus de 90%, de préférence sensiblement 100% de la longueur de la tuile.

De préférence, la face froide est sensiblement plane entre les gorges, en dehors des zones définissant la ou les gorges et le ou les logements de fixation.

Dans un mode de réalisation préféré, la face froide est biseautée longitudinalement. De préférence, elle présente, à partir de chacun de ses bords longitudinaux, une portion plane, ou « biseau » longitudinal 26. De préférence, le biseau longitudinal 26 est incliné, par rapport au plan de base P₁₂, d'un angle α supérieur à 10° et/ou inférieur à 45°. De préférence, le biseau longitudinal 26 présente une largeur l₂₆ supérieure à 10 mm et/ou inférieure à 50 mm.

Dans un mode de réalisation préféré, la face froide est biseautée transversalement. De préférence, elle présente, à partir de chacun de ses bords transversaux, une portion plane, ou « biseau » transversal 27. De préférence, le biseau transversal 27 est incliné, par rapport au plan de base P₁₄, d'un angle supérieur à 10° et/ou inférieur à 45°. De préférence, le biseau transversal 27 présente une largeur supérieure à 10 mm et/ou inférieure à 50 mm.

Dans un mode de réalisation préféré, comme représenté sur les figures 1 et 2, la face froide porte une ou plusieurs entretoises 28, de préférence disposées dans les gorges et destinées à maintenir les surfaces des gorges légèrement écartées des tubes dans la position de service.

De préférence, la face chaude ne présente pas d'arête saillante d'une longueur supérieure à 10 mm ou 20mm, de préférence pas d'arête marquant une rupture de pente.

Dans un mode de réalisation, la face chaude 12 ne présente pas de surface plane parallèle au plan de base P₁₂, de préférence pas de zone plane, comme sur les figures 1 à 3, une ligne n'étant pas considérée comme une surface.

Une tuile selon l'invention présente, du côté de la face chaude, une épaisseur de matière non nulle au-dessus de ladite gorge et au-dessus dudit logement de fixation, de préférence au-dessus de chaque gorge et au-dessus de chaque dit logement de fixation, ladite épaisseur étant mesurée entre la face chaude et le plan de base P₁₂.

Selon l'invention, l'épaisseur de matière, mesurée entre la face chaude et le plan de base P₁₂, diminue progressivement depuis la position du logement de fixation jusqu'à la position de la gorge. De préférence, ladite épaisseur de matière diminue progressivement depuis la position du logement de fixation jusqu'au bord longitudinal de la tuile situé du côté de la gorge (figure 4e).

Dans un plan de coupe transversal médian, la face chaude 12 présente un profil transversal Pc, reporté au-dessus de la figure 3 pour plus de clarté.

De préférence, le profil transversal de la face chaude est le même quel que soit le plan de coupe transversal choisi dans une portion de la tuile s'étendant, entre deux plans transversaux, sur plus de 50%, plus de 70%, plus de 90%, de préférence 100% de la longueur de la tuile.

De préférence, le profil transversal Pc est strictement convexe sur plus de 80%, de préférence plus de 90%, de préférence 100% de la largeur de la tuile.

De préférence, le profil transversal Pc ne comporte pas de portion strictement concave.

De préférence, le profil transversal est bombé vers l'extérieur. De préférence, ce profil transversal bombé est sensiblement symétrique par rapport au plan longitudinal médian, comme dans les modes de réalisation des figures 1 à 3.

Dans un plan de coupe transversal, la base B est le segment de droite qui s'étend entre les deux extrémités M1 et M2 du profil transversal Pc.

De préférence, le rapport (C_{c}-I_{B})*100/I_{B} est supérieur à 0,5 et/ou inférieur ou égal à 5, de préférence inférieur 2, où la longueur C_{c} est la longueur curviligne du profil transversal P_{c} et I_{B} est la longueur de la base.

Dans le mode de réalisation de la figure 3, I_{B} = I₁₀.

Par convention, on appelle, dans un plan transversal :
- x(M) la position d'un point M le long de la base B ;
- x₂₀ la position de la gorge 20 le long de la base B, identifiée par la position du point de la gorge 20 le plus proche de la base B ;
- x₂₂ la position du logement de fixation 22 le long de la base B, identifiée par la position du point du logement de fixation le plus proche de la base B, et classiquement au milieu du logement de fixation comme représenté sur la figure 3 ;
- e(M) l'épaisseur de matière, à la position x(M), au-dessus de la base B, c'est-à-dire depuis la base jusqu'à la face chaude ;
- e₂₀ l'épaisseur de matière, au-dessus de la base B, à la position x₂₀ de la gorge 20 ;
- e₂₂ l'épaisseur de matière, au-dessus de la base B, à la position x₂₂ du logement de fixation 22 ;
- eᵢ l'épaisseur de matière, au-dessus de la base B, à la position xᵢ au bord de la gorge la plus proche du logement de fixation ;
- e'(M) l'épaisseur de matière, à la position x(M), en dessous de la base B, c'est-à-dire depuis la base B jusqu'à la face froide ;
- e'₂₀ l'épaisseur de matière, en dessous de la base B, à la position x₂₀ de la gorge 20 ;
- e'₂₂ l'épaisseur de matière, en dessous de la base B, à la position x₂₂ du logement de fixation 22 ;
- e"₂₀ l'épaisseur de matière séparant la face froide et la face chaude à la position x₂₀ de la gorge 20 (e"₂₀ = e₂₀ + e'₂₀) ;
- e"₂₂ l'épaisseur de matière séparant la face froide et la face chaude à la position x₂₂ du logement de fixation 22 (e"₂₂ = e₂₂ + e'₂₂) ;
- e"(M) l'épaisseur de matière séparant la face froide et la face chaude à la position x(M),
- eₘᵢₙ la plus petite épaisseur de matière séparant la face froide et la face chaude lorsque M se déplace le long de la base, c'est-à-dire la plus petite valeur de e"(M) ;
- eₘₐₓ l'épaisseur hors tout maximale de la tuile.

Quand la distance entre la base B d'une part et le logement de fixation ou une gorge d'autre part est minimale tout au long d'un segment de la base, on considère que la position du logement de fixation ou de la gorge, respectivement, est la position du point qui est au milieu de ce segment.

Selon l'invention,
- e₂₀ > 0 mm, de préférence e₂₀ > 0,5 mm, de préférence e₂₀ > 1 mm, de préférence e₂₀ > 5 mm, et/ou e₂₀ < 80 mm, de préférence e₂₀ < 50 mm, e₂₀ < 30 mm ou même e₂₀ < 20 mm, ou même e₂₀ < 10 mm, ou même e₂₀ < 5 mm, et
- e₂₂ > 0 mm, de préférence e₂₂ > 0,5 mm, de préférence e₂₂ > 1 mm, de préférence e₂₂ > 5 mm, et/ou e₂₂ < 80 mm, de préférence e₂₂ < 50 mm, e₂₂ < 30 mm ou même e₂₂ < 20 mm.

De préférence, le rapport e₂₂/ e₂₀ > 1, de préférence e₂₂/ e₂₀ > 1,1, de préférence e₂₂/ e₂₀ > 1,3, de préférence e₂₂/ e₂₀ > 1,5, de préférence e₂₂/ e₂₀ > 1,8, de préférence e₂₂/ e₂₀ > 2, et/ou e₂₂/ e₂₀ < 10, de préférence e₂₂/ e₂₀ < 5, de préférence e₂₂/ e₂₀ < 3. Le rapport e₂₂/ e₂₀ peut être supérieur à 1,2.

De préférence, e(M) ≥ 0, de préférence e(M) > 0, de préférence quel que soit le point M d'un segment de la base considéré, ledit segment représentant de préférence plus de 50%, plus de 70%, plus de 90%, de préférence 100% de la longueur de la base.

De préférence, e(M) est croissant depuis le point M1 et/ou M2 jusqu'au milieu Mi de la base B. De préférence, l'épaisseur e(Mi) au milieu de la base et/ou l'épaisseur e₂₂ et/ou l'épaisseur e₂₀, de préférence l'épaisseur e₂₂, est l'épaisseur maximale au-dessus de la base.

De préférence, dans les portions de la base s'étendant entre les gorges et ne s'étendant pas au-dessus du logement de fixation, e'(M) est constant, de préférence supérieur à 20 mm et/ou inférieur à 100 mm.

Dans un mode de réalisation, le rapport e₂₂/eᵢ est supérieur à 1, de préférence supérieur à 1,1 et/ou inférieur à 2, de préférence inférieur à 1,5 et/ou de préférence inférieur à 1,3.

De préférence, e₂₂ est supérieur à eᵢ et eᵢ est supérieur à e₂₀.

De préférence, le profil transversal Pc ne présente pas de portion plane s'étendant transversalement, de préférence pas de portion plane au-dessus de la gorge et/ou au-dessus du logement de fixation, de préférence aucune portion plane.

De préférence, le profil transversal Pc ne présente pas de point singulier, c'est-à-dire pas de rupture de pente.

De préférence, le profil transversal Pc est bombé vers l'extérieur. De préférence, ce profil transversal bombé est sensiblement symétrique par rapport au plan longitudinal médian Pm.

De préférence encore, le rapport eₘₐₓ/e"₂₂ est supérieur à 2 et/ou inférieur à 5.

De préférence encore, le rapport eₘₐₓ/e"₂₀ est supérieur à 1,5 et/ou inférieur à 4.

De préférence, eₘₐₓ est mesurée dans le plan longitudinal médian de la tuile.

De préférence, le rapport (eₘₐₓ- eₘᵢₙ)/eₘₐₓ est supérieur à 0,1, à 0,2 à 0,3 et/ou inférieur à 0,8.

Dans ledit plan transversal, la largeur l₂, de l'ouverture du logement de fixation est de préférence comprise entre 10 et 60 mm.

Dans ledit plan transversal, lorsque la gorge considérée est à proximité d'une face latérale 16 de la tuile, c'est-à-dire n'en est pas séparée par une autre gorge, la distance du bord de la gorge à ladite face latérale est de préférence inférieure à 50 mm. Dans le mode de réalisation de la figure 3, cette distance est égale à l₂₆.

Les caractéristiques décrites ci-dessus pour le profil transversal Pc sont de préférence applicables pour l'ensemble des gorges et des logements de fixation. Elles sont de préférence applicables dans un plan de coupe transversal quelconque d'une fraction de la tuile comprise entre deux plans transversaux séparés d'une distance, le long de la direction de la longueur de la tuile, représentant plus de 50%, de préférence plus de 70%, plus de 90%, de préférence 100% de la longueur de la tuile.

Lorsqu'un plan transversal ne coupe pas le logement de fixation, la position x₂₂ est celle du plan longitudinal (plan longitudinal médian Pₘ sur la figure 3) qui passe par le point du logement de fixation qui est le plus proche du plan de base P₁₂.

De préférence, dans le plan transversal médian, de préférence dans tout plan transversal, l'épaisseur de matière est maximale au-dessus du logement de fixation et/ou au-dessus de la gorge.

Dans un mode de réalisation, dans le plan transversal médian, de préférence dans tout plan transversal, les deux endroits où l'épaisseur de matière au-dessus de la base est la plus grande sont au-dessus du logement de fixation et au-dessus de la gorge.

Dans le plan longitudinal médian Pₘ, de préférence dans tout plan longitudinal, le profil longitudinal de la face chaude est de préférence rectiligne, de préférence parallèle au plan de base P₁₂, comme dans les modes de réalisation des figures 1 et 2. Dans un mode de réalisation, le profil longitudinal de la face chaude est configuré de manière que l'épaisseur de matière entre le plan de base P₁₂ et ledit profil longitudinal soit maximale à la position de l'ancrage (ou aux positions des ancrages si la tuile comporte plusieurs logements de fixation), c'est-à-dire à la position du plan transversal qui passe par l'ancrage disposé dans le logement de fixation dans la position de service.

Dans un mode de réalisation, l'épaisseur de matière entre le plan de base P₁₂ et la face chaude est maximale à la position de l'ancrage (ou aux positions des ancrages si la tuile comporte plusieurs logements de fixation). En particulier, la face chaude peut présenter la forme générale d'un dôme dont le sommet est, dans la position de service, au-dessus de l'ancrage, ou une forme générale présentant plusieurs dômes dont les sommets sont chacun, dans la position de service, au-dessus d'un ancrage respectif.

Dans le plan longitudinal médian Pₘ, de préférence dans tout plan longitudinal, le profil de la face froide est de préférence rectiligne, de préférence parallèle au plan de base P₁₂, en faisant abstraction des portions dudit profil longitudinal définissant le ou les logements de fixation.

### Exemples

Toutes les tuiles des exemples sont réalisées avec le même matériau, à savoir le Refrax^{®}Plus (carbure de SiC liaison nitrure ayant une porosité ouverte de 13 % en volume, une teneur en SiC de l'ordre de 77% en masse et une conductivité thermique de 16 W/(m*K) à1000°C).

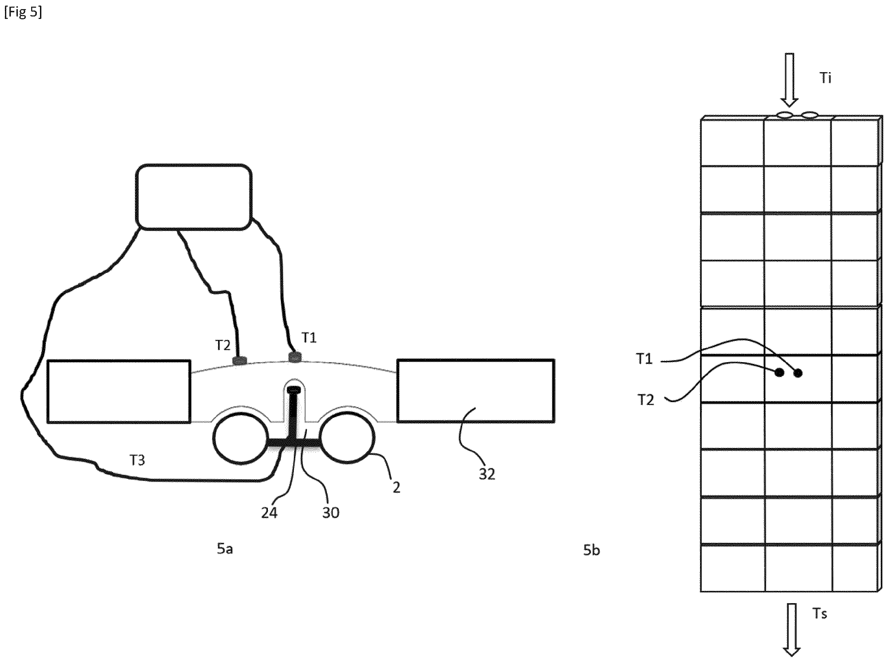

Les tuiles sont testées dans un four de laboratoire dont la chambre de combustion est parcourue, sur toute sa hauteur (deux mètres) par deux tubes 2 verticaux parallèles (voir figure 5), de diamètre interne 50 mm et de diamètre externe 62 mm. Les deux tubes 2 sont reliés entre eux par une plaque métallique 24 de qualité 310, d'épaisseur 12 mm et de largeur 18 mm. Cette plaque métallique comporte dix ancrages métalliques de qualité 310 disposés verticalement de manière à retenir dix tuiles 10 identiques reposant les unes sur les autres.

Chaque ancrage métallique est constitué d'une tige filetée d'une longueur de 40 mm soudée à la plaque métallique 24 et d'un boulon de diamètre 8 mm vissé à l'extrémité de la tige. Le boulon est ainsi mobile à l'extrémité de la tige afin de permettre un ajustement précis d'un espacement de 8 mm entre chaque gorge et le tube en regard.

Lors de l'ancrage, les tuiles sont jointoyées par un mat de fibres silico-alumineuses de 3 mm d'épaisseur et de conductivité thermique de 0,2 W/ (m*K) à 1000°C, afin d'accommoder les dilatations.

Un béton 30 auto-nivelant Refrax^{®}PLUSFlow comprenant 70,5% en masse de SiC et ayant une masse volumique apparente après séchage de 2,7g/cm³ et une conductivité thermique de 6 W/(m*K) à 1000°C est ensuite coulé entre les tuiles et la membrane constituée des tubes 2 et de la plaque métallique 24. Le béton est séché avant la montée en température du four.

Les faces froides et les faces latérales de toutes les tuiles testées sont identiques, à l'exception des faces latérales de la figure 4a qui sont plus étendues du côté de la face chaude. La tuile de la figure 4a, qui n'est pas conforme à l'invention, est ainsi uniformément surépaissie, par rapport aux autres tuiles, d'une épaisseur Δe de 9,5 mm au-delà du plan de référence R tracé sur la figure 4. Le plan de base P₁₂ se confond donc avec le plan de référence R, sauf pour la figure 4a.

Chaque face froide définit un unique logement de fixation et deux gorges disposées de manière que la superposition des dix tuiles forme un revêtement réfractaire couvrant les tubes sur toute la hauteur de la chambre de combustion. Ce revêtement est complété avec un isolant 32 conventionnel, en l'occurrence des briques réfractaires isolantes RI34, de manière à couvrir toute la paroi de la chambre de combustion sur laquelle s'étend la membrane.

Chaque tuile présente une longueur L₁₀ de 200 mm, une largeur l₁₀ de 194 mm, des épaisseurs eₘₐₓ et e"₂₂, en référence à la figure 3, respectivement de 50 mm et 14,5 mm. L'épaisseur maximale eₘₐₓ est aux positions x₂₂ des logements de fixation 22, de sorte que la profondeur d'ancrage est de 35,5mm. Les logements de fixation, tous identiques, présentent une ouverture O₂₂, sur la face froide, de 20 mm.

Chacune des deux gorges présente une profondeur P₂₀, une ouverture O₂₀ et un rayon de courbure respectivement de 13 mm, 55,9 mm et 36,5 mm.

On définit également une position intermédiaire xᵢ, entre la position x₂₂ du logement de fixation 22 et la position x₂₀ d'une gorge 20. L'épaisseur eᵢ est l'épaisseur à la position intermédiaire xᵢ, à partir de la base.

La position xᵢ est à 22,1 mm de la position x₂₂. La position intermédiaire est la position du bord d'une gorge le plus proche du logement de fixation. Sur les figures 4b et 4d, qui ne sont pas conformes à l'invention, la position intermédiaire est également la position du bord longitudinal d'un bombement centré sur la position du logement de fixation et qui s'étend, sur toute la longueur de la tuile. Sur les figures 4c et 4d, qui ne sont pas conformes à l'invention, la position intermédiaire est également la position d'un bord longitudinal d'un bombement centré sur la position d'une gorge et qui s'étend, sur toute la longueur de la tuile, l'autre bord longitudinal du bombement s'étendant à 77,9 mm de la position x₂₂ du logement de fixation 22 (largeur du bombement de 55,8 mm).

Sur la figure 4f, qui est conforme à l'invention, les bords longitudinaux du bombement centré sur la position du logement de fixation s'étendent à 77,9 mm de la position x₂₂ du logement de fixation 22 (largeur du bombement de 155,8 mm).

Sur la figure 4g, qui est conforme à l'invention, les bords longitudinaux du bombement centré sur la position du logement de fixation s'étendent à 48,4 mm de la position x₂₂ du logement de fixation 22 (largeur du bombement de 97 mm).

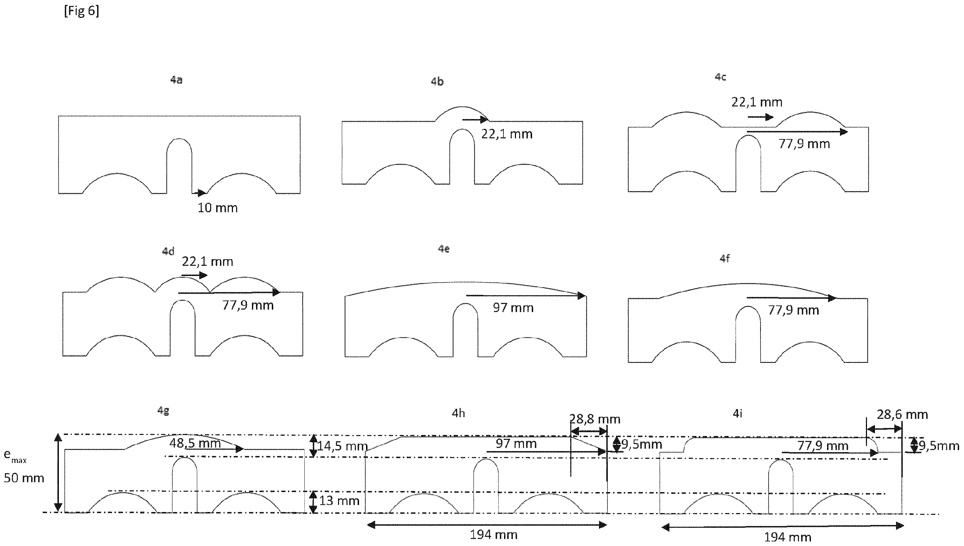

Sur la figure 4h, qui n'est pas conforme à l'invention, représentative du profil de la figure 4 de FR2785670A1, le profil transversal est constitué d'une partie plane bordée d'un biseau à chaque extrémité. La longueur projetée des biseaux sur la base est de 28,8 mm (figure 6). Les extrémités du profil transversal sont à 97 mm de la position x₂₂ du logement de fixation 22.

Sur la figure 4i, qui n'est pas conforme à l'invention, représentative du profil de la figure 3 de WO2007/137189A2, le profil transversal est constitué d'une partie plane bordée d'un coin arrondi formant un arc de 90° dont la longueur projetée sur la base est de 28,6 mm. Les extrémités du profil transversal sont à 77,9 mm de la position x₂₂ du logement de fixation 22.

Toutes les tuiles d'un même exemple sont identiques. Les exemples diffèrent par le profil transversal de la face chaude de la tuile utilisée. Les profils transversaux testés sont ceux des figures 4a) à 4i). Ils sont identiques quel que soit le plan transversal considéré.

Pour chaque exemple, la chambre de combustion à pression ambiante, sous air, est chauffée au moyen de résistances en graphite jusqu'à une température de consigne de 1200°C.

De l'eau est mise en circulation dans les tubes. La température d'entrée Ti de l'eau est d'environ 20°C. Le débit est de 0,5 L/s et par tube. Les températures de l'eau en entrée Ti et en sortie Ts des tubes sont mesurées au moyen de sondes piquées dans lesdits tubes et fixées de manière à assurer une étanchéité.

Par ailleurs, comme cela est schématisé sur la figure 5, deux thermocouples de type S sont placés sur la face chaude de la 5^{ème} tuile en partant du bas :
∘ Le premier thermocouple est disposé en face de l'ancrage et mesure la température T1.
∘ Le deuxième thermocouple est disposé à mi-hauteur de la tuile en face d'un des tubes. Il mesure la température T2.

Enfin, un thermocouple de type K mesure la température T3 à l'extrémité de l'ancrage.

Les résultats sont présentés dans le tableau n°1 suivant.

Les dimensions indiquées sont exprimées en mm.

Les positions de mesure des épaisseurs font référence à la description qui précède, et en particulier à la description de la figure 3.

La puissance P est calculée en considérant l'élévation de température de l'eau entre l'entrée et la sortie des tubes selon la formule suivante : P = [Ts-Ti] * débit * Cp (eau) où le débit est de 0,5 Us.

Le tableau 1 fournit, pour un exemple, la différence relative de la température maximale mesurée par les thermocouples de type S pour cet exemple (Tmax = max(T1, T2)) par rapport à celle de l'exemple 1 (Tmax₁), c'est-à-dire (Tmax - Tmax₁) / Tmax₁.

Tmax est représentatif de la température maximale sur la face chaude. La mesure de ladite différence permet ainsi d'apprécier l'effet de la forme de la tuile sur cette température maximale.

Le tableau 1 fournit, pour un exemple, la différence relative de la température maximale mesurée à l'ancrage T3 (T3_{Exemple}) par rapport à celle de l'exemple 1 (T3_{Exemple 1}), c'est-à-dire (T3_{Exemple} - T3_{Exemple 1}) / T3_{Exemple 1}.

**[Tableau 1]**

| | 1 (*) | 2 (*) | 3 (*) | 4 (*) | 5 | 6 | 7 | 8 (*) | 9 (*) |
|---|---|---|---|---|---|---|---|---|---|
| Figure | 4a | 4b | 4c | 4d | 4e | 4f | 4g | 4h | 4i |
| Longueur curviligne C_{c} du profil transversal Pc | 194 | 199,2 | 202,4 | 207,6 | 195,2 | 195,6 | 196,4 | 197 | 204,8 |
| Epaisseur e₂₀ (au droit de la gorge) | 0 | 0 | 9,5 | 9,5 | 7 | 4,5 | 0 | 9,5 | 9,5 |
| Epaisseur eᵢ (position intermédiaire ) | 0 | 0 | 0 | 0 | 9,0 | 8,6 | 7,6 | 9,5 | 9,5 |
| Epaisseur e₂₂ (au droit du logement de fixation) | 0 | 9,5 | 0 | 9,5 | 9,5 | 9,5 | 9,5 | 9,5 | 9,5 |
| Accroissement puissance thermique transférée P | 100=ref | 4% | 3% | 2% | 2% | 3% | 3% | 0% | ≤1% |
| Accroissement Tmax (face chaude) | 100=ref | +4% | -1% | +2% | +1% | +1% | +2% | -1% | 0% |
| Accroissement T3 (ancrage) | 100=ref | +5% | +4% | +2% | +1% | +1% | +1% | 0% | 0% |

Les inventeurs considèrent que, dans les applications visées,
- la température T3 ne devrait pas augmenter de plus de 1,5% ;
- la température Tmax ne devrait pas augmenter de plus de 2% ;
- la puissance transférée devrait être maximale.

Dans ces exemples, on peut constater qu'un bombement de la face chaude qui ne couvre pas au moins la région de cette face comprise entre la position du logement de fixation de l'ancrage et la position des gorges ne permet pas d'obtenir le compromis souhaité.

De manière remarquable, on peut également constater que les tuiles selon l'invention présentent des performances supérieures à la tuile de la figure 4a qui présente une surépaisseur Δe, alors même qu'elles sont moins volumineuses.

Les exemples 6 et 7 sont considérés comme préférés entre tous.

Comme cela apparaît clairement, les tuiles de l'invention avec une épaisseur de matière, au-dessus de la base, depuis la position de l'ancrage jusqu'aux positions des gorges, voire au-delà des positions des gorges présentent le meilleur compromis entre un transfert maximal de puissance thermique et une température la plus faible possible à l'extrémité de l'ancrage et en face chaude de la tuile, à l'origine d'une bonne résistance à la fissuration.

L'invention fournit donc une tuile peu encombrante et qui assure une protection thermique des tubes, tout en assurant un transfert de chaleur adapté à la récupération d'énergie. La forme bombée progressive est considérée comme optimale.

Bien entendu, l'invention n'est pas limitée aux modes de réalisation décrits et représentés, fournis à des fins illustratives seulement.

## Revendications

1. Tuile réfractaire destinée, dans une position de service, à protéger une paroi de tubes de récupération d'énergie garnissant intérieurement une chambre de combustion d'un four, de préférence d'un four d'incinération d'ordures ménagères ou de biomasse, ladite tuile présentant :
- une face destinée, dans ladite position de service, à être exposée à l'intérieur du four, dite « face chaude » (12) ;
- une face opposée à la face chaude, dite « face froide » (14), définissant :
- une gorge s'étendant sur toute la longueur de la tuile et destinée, dans ladite position de service, à recevoir un dit tube, et
- un logement de fixation configuré pour recevoir, dans ladite position de service, un ancrage, ou « organe de retenue », de manière à immobiliser la tuile par rapport audit tube,
la tuile présentant, dans un plan de coupe transversal, au moins à chaque position entre la position (x₂₀) de la gorge (20) et la position (x₂₂) du logement de fixation (22), une épaisseur de matière (e(M)) non nulle, et
le rapport (e₂₂ /e₂₀) de l'épaisseur de matière à ladite position (x₂₂) du logement de fixation (22) sur l'épaisseur de matière à ladite position (x₂₀) de la gorge étant supérieur à 1,
l'épaisseur étant mesurée entre le profil transversal de la face chaude et un segment de droite, dit « base » (B), reliant les extrémités du profil transversal (Pc) de la face chaude, lesdites positions étant déterminées le long de ladite base (B),
un plan transversal étant un plan perpendiculaire à la direction de la longueur de la tuile et un profil transversal étant un profil dans un plan transversal,
la direction de la longueur de la tuile étant définie par la direction générale de la gorge, la direction de la largeur de la tuile étant définie par la direction perpendiculaire à la direction de la longueur, dans le plan général de la tuile, et
l'épaisseur étant mesurée perpendiculairement aux directions de la longueur et de la largeur,
la position de la gorge (x₂₀) le long de la base B étant identifiée par la position du point de la gorge (20) le plus proche de la base (B) et
la position du logement de fixation (x₂₂) le long de la base (B) étant identifiée par la position du point du logement de fixation le plus proche de la base (B),
la tuile étant **caractérisée en ce que** l'épaisseur de matière diminue progressivement depuis la position (x₂₂) du logement de fixation (22) jusqu'à la position (x₂₀) de la gorge (20).

2. Tuile selon la revendication précédente, dans laquelle le rapport (e₂₂ /e₂₀) de l'épaisseur de matière à ladite position (x₂₂) du logement de fixation (22) sur l'épaisseur de matière à ladite position (x₂₀) de la gorge est supérieur à 1,2.

3. Tuile selon la revendication précédente, dans laquelle le rapport (e₂₂ /e₂₀) de l'épaisseur de matière à ladite position (x₂₂) du logement de fixation (22) sur l'épaisseur de matière à ladite position (x₂₀) de la gorge est supérieur à 2.

4. Tuile selon l'une quelconque des revendications précédentes, dans laquelle, à ladite position (x₂₀) de la gorge, ladite épaisseur de matière (e₂₀) est inférieure à 30 mm.

5. Tuile selon l'une quelconque des revendications précédentes, dans laquelle, à ladite position (x₂₂) du logement de fixation (22) et/ou à ladite position (x₂₀) de la gorge, ladite épaisseur de matière (e₂₂,e₂₀) est supérieure à 5 mm.

6. Tuile selon l'une quelconque des revendications précédentes, dans laquelle ladite épaisseur de matière (e₂₂) est maximale à la position (x₂₂) du logement de fixation (22).

7. Tuile selon la revendication précédente, dans laquelle ladite épaisseur de matière est maximale seulement à la position (x₂₂) du logement de fixation,

8. Tuile selon l'une quelconque des revendications précédentes, présentant une dite épaisseur de matière non nulle (e(M)) à toute position (x(M)) sur un segment de ladite base (B) représentant plus de 70% de la longueur de ladite base.

9. Tuile selon l'une quelconque des revendications précédentes, dans laquelle ladite épaisseur de matière augmente à mesure que la position, le long de la base (B), se rapproche de la position (x₂₂) du logement de fixation (22).

10. Tuile selon l'une quelconque des revendications précédentes, dans laquelle ledit profil transversal évolue, le long de ladite base, sans rupture de pente.

11. Tuile selon l'une quelconque des revendications précédentes, dans laquelle ledit profil transversal est strictement convexe sur plus de 80% de la largeur de la tuile.

12. Tuile selon l'une quelconque des revendications précédentes, comportant un unique logement de fixation et exactement deux gorges s'étendant de part et d'autre du logement de fixation, ledit profil transversal est symétrique par rapport au plan longitudinal médian (Pm) de la tuile.

13. Tuile selon l'une quelconque des revendications précédentes, la face froide présentant un biseau longitudinal (26) le long de chacun de ses bords longitudinaux et/ou un biseau transversal (27) le long de chacun de ses bords transversaux.

14. Tuile selon l'une quelconque des revendications précédentes, ledit profil transversal étant dans un plan de coupe transversal quelconque d'une fraction de la tuile comprise entre deux plans transversaux séparés d'une distance, le long de la direction de la longueur de la tuile, représentant plus de 50% de la longueur de la tuile, la longueur de la tuile étant définie par la direction générale de la gorge (20).

15. Tuile selon l'une quelconque des revendications précédentes, dans laquelle la face chaude présente, dans le plan longitudinal médian (Pₘ), de préférence dans tout plan longitudinal, un profil longitudinal configuré de manière que l'épaisseur de matière entre le plan de base de la face chaude (P₁₂) et ledit profil longitudinal soit maximale à la position du plan transversal qui passe par la position (x₂₂) du logement de fixation (22), le plan longitudinal médian étant le plan longitudinal à mi-largeur de la tuile, un plan longitudinal étant un plan perpendiculaire à la direction de la largeur de la tuile,
le plan de base de la face chaude étant le plan dans lequel s'étend le contour délimitant extérieurement la face chaude.

16. Tuile selon la revendication précédente, dans laquelle l'épaisseur de matière entre le plan de base de la face chaude (P₁₂) et la face chaude est maximale à la position du logement de fixation.

17. Four, de préférence four d'incinération d'ordures ménagères ou de biomasse, comportant une chambre de combustion revêtue intérieurement de :
- une pluralité de tubes (2) de récupération d'énergie ; et
- un assemblage de tuiles réfractaires (10) suspendues à des ancrages rigidement solidaires desdits tubes et agencées de manière à protéger lesdits tubes ;
ledit assemblage comportant une tuile selon l'une quelconque des revendications précédentes.

## Patentansprüche

1. Feuerfeste Fliese, die dazu bestimmt ist, in einer Betriebsposition eine Wand aus Energierückgewinnungsrohren zu schützen, die eine Brennkammer eines Ofens, vorzugsweise eines Ofens zur Verbrennung von Hausmüll oder Biomasse, innen verkleiden, wobei die Fliese Folgendes aufweist:
- eine Seite, die dazu bestimmt ist, in der Betriebsposition dem Inneren des Ofens ausgesetzt zu sein, die "heiße Seite" (12);
- eine der heißen Seite gegenüberliegende Seite, die "kalte Seite" (14), die Folgendes definiert:
- eine Rille, die sich über die gesamte Länge der Fliese erstreckt und dazu bestimmt ist, in der Betriebsposition eins der Rohre aufzunehmen, und
- eine Befestigungsaufnahme, die dazu ausgebildet ist, in der Betriebsposition eine Verankerung oder ein "Rückhalteorgan" aufzunehmen, um die Fliese bezogen auf das Rohr zu fixieren,
wobei das Rohr in einer Querschnittsebene wenigstens an jeder Position zwischen der Position (x₂₀) der Rille (20) und der Position (x₂₂) der Befestigungsaufnahme (22) eine Materialdicke (e(M)) ungleich null aufweist, und
das Verhältnis (e₂₂ /e₂₀) der Materialdicke an der Position (x₂₂) der Befestigungsaufnahme (22) zur Materialdicke an der Position (x₂₀) der Rille größer als 1 ist,
wobei die Dicke zwischen dem Querprofil der heißen Seite und einem Geradenabschnitt, "Grundseite" (B) genannt, der die Enden des Querprofils (Pc) der heißen Seite verbindet, gemessen wird, wobei die Positionen entlang der Grundseite (B) bestimmt werden,
wobei eine Querebene eine senkrechte Ebene zur Richtung der Länge der Fliese ist und ein Querprofil ein Profil in einer Querebene ist,
wobei die Richtung der Länge der Fliese von der allgemeinen Richtung der Rille definiert ist, die Richtung der Breite der Fliese von der senkrechten Richtung zur Richtung der Länge in der allgemeinen Ebene der Fliese definiert ist, und
die Dicke senkrecht zu den Richtungen der Länge und der Breite gemessen wird,
wobei die Position der Rille (x₂₀) entlang der Grundseite B durch die Position des Punkts der Rille (20) festgestellt wird, der der Grundseite (B) am nächsten liegt, und
die Position der Befestigungsaufnahme (x₂₂) entlang der Grundseite (B) durch die Position des Punkts der Befestigungsaufnahme festgestellt wird, der der Grundseite (B) am nächsten liegt,
wobei die Fliese **dadurch gekennzeichnet ist, dass** die Materialdicke von der Position (x₂₂) der Befestigungsaufnahme (22) bis zur Position (x₂₀) der Rille (20) allmählich abnimmt.

2. Fliese nach dem vorhergehenden Anspruch, wobei das Verhältnis (e₂₂ /e₂₀) der Materialdicke an der Position (x₂₂) der Befestigungsaufnahme (22) zur Materialdicke an der Position (x₂₀) der Rille größer als 1,2 ist.

3. Fliese nach dem vorhergehenden Anspruch, wobei das Verhältnis (e₂₂ /e₂₀) der Materialdicke an der Position (x₂₂) der Befestigungsaufnahme (22) zur Materialdicke an der Position (x₂₀) der Rille größer als 2 ist.

4. Fliese nach einem der vorhergehenden Ansprüche, wobei an der Position (x₂₀) der Rille die Materialdicke (e₂₀) kleiner als 30 mm ist.

5. Fliese nach einem der vorhergehenden Ansprüche, wobei an der Position (x₂₂) der Befestigungsaufnahme (22) und/oder der Position (x₂₀) der Rille die Materialdicke (e₂₂ /e₂₀) größer als 5 mm ist.

6. Fliese nach einem der vorhergehenden Ansprüche, wobei die Materialdicke (e₂₂) an der Position (x₂₂) der Befestigungsaufnahme (22) maximal ist.

7. Fliese nach dem vorhergehenden Anspruch, wobei die Materialdicke nur an der Position (x₂₂) der Befestigungsaufnahme maximal ist.

8. Fliese nach einem der vorhergehenden Ansprüche, die auf einem Segment der Grundseite (B), das mehr als 70 % der Länge der Grundseite ausmacht, an jeder Position (x(M)) eine Materialdicke ungleich null (e(M)) aufweist.

9. Fliese nach einem der vorhergehenden Ansprüche, wobei die Materialdicke zunimmt, je mehr sich die Position entlang der Grundseite (B) an die Position (x₂₂) der Befestigungsaufnahme (22) annähert.

10. Fliese nach einem der vorhergehenden Ansprüche, wobei das Querprofil ohne Knickpunkt entlang der Grundseite verläuft.

11. Fliese nach einem der vorhergehenden Ansprüche, wobei das Querprofil über mehr als 80 % der Breite der Fliese streng konvex ist.

12. Fliese nach einem der vorhergehenden Ansprüche, die eine einzige Befestigungsaufnahme und genau zwei Rillen, die sich beiderseits der Befestigungsaufnahme erstrecken, aufweist, wobei das Querprofil bezogen auf die Mittellängsebene (Pm) der Fliese symmetrisch ist.

13. Fliese nach einem der vorhergehenden Ansprüche, wobei die kalte Seite eine Längsschräge (26) entlang jedes ihrer Längsränder und/oder eine Querschräge (27) entlang jedes ihrer Querränder aufweist.

14. Fliese nach einem der vorhergehenden Ansprüche, wobei das Querprofil in einer beliebigen Querschnittsebene eines Anteils der Fliese liegt, der zwischen zwei Querebenen enthalten ist, die um einen Abstand entlang der Richtung der Länge der Fliese getrennt sind, der mehr als 50 % der Länge der Fliese ausmacht, wobei die Länge der Fliese von der allgemeinen Richtung der Rille (20) definiert ist.

15. Fliese nach einem der vorhergehenden Ansprüche, wobei die heiße Seite in der Mittellängsebene (Pₘ), vorzugsweise in jeder Längsebene, ein Längsprofil aufweist, das so ausgebildet ist, dass die Materialdicke zwischen der Grundebene der heißen Seite (P₁₂) und dem Längsprofil an der Position der Querebene, die die Position (x₂₂) der Befestigungsaufnahme (22) passiert, maximal ist, wobei die Mittellängsebene die Längsebene auf mittlerer Breite der Fliese ist, wobei eine Längsebene eine senkrechte Ebene zur Richtung der Breite der Fliese ist,
wobei die Grundebene der heißen Seite die Ebene ist, in der sich die Kontur erstreckt, die die heiße Seite außen begrenzt.

16. Fliese nach dem vorhergehenden Anspruch, wobei die Materialdicke zwischen der Grundebene der heißen Seite (P₁₂) und der heißen Seite an der Position der Befestigungsaufnahme maximal ist.

17. Ofen, vorzugsweise Ofen zur Verbrennung von Hausmüll oder Biomasse, der eine Brennkammer aufweist, die innen mit Folgendem ausgekleidet ist:
- einer Mehrzahl von Energierückgewinnungsrohren (2); und
- einer Anordnung von feuerfesten Fliesen (10), die an Verankerungen aufgehängt sind, die starr mit den Rohren verbunden sind und so angeordnet sind, dass sie die Rohre schützen; wobei die Anordnung eine Fliese nach einem der vorhergehenden Ansprüche aufweist.

## Claims

1. A refractory tile, which is intended, in a service position, to protect a wall of energy recovery tubes internally lining a combustion chamber of a furnace, preferably of a furnace for incinerating household waste or biomass, said tile having:
- a face, called "hot face" (12), which is intended, in said service position, to be exposed inside the furnace;
- a face, called "cold face" (14), opposite the hot face, defining:
- a groove extending over the entire length of the tile and intended, in said service position, to receive one of said tubes; and
- a fastening receptacle configured to receive, in said service position, an anchor, or "retaining member", so as to immobilize the tile with respect to said tube,
the tile having, in a transverse section plane, at least at each position between the position (x₂₀) of the groove (20) and the position (x₂₂) of the fastening receptacle (22), a non-zero material thickness (e(M)), and the ratio (e₂₂/e₂₀) of the material thickness at said position (x₂₂) of the fastening receptacle (22) to the material thickness at said position (x₂₀) of the groove being greater than 1,
the thickness being measured between the transverse profile of the hot face and a straight segment, called "base" (B), connecting the ends of the transverse profile (Pc) of the hot face, said positions being determined along said base (B),
a transverse plane being a plane perpendicular to the direction of the length of the tile and a transverse profile being a profile in a transverse plane;
the direction of the length of the tile being defined by the general direction of the groove; the direction of the width of the tile being defined by the direction perpendicular to the direction of the length, in the general plane of the tile; and
the thickness being measured perpendicular to the directions of the length and of the width;
the position of the groove (x₂₀) along the base (B) being identified by the position of the point of the groove (20) closest to the base (B); and
the position of the fastening receptacle (x₂₂) along the base (B) being identified by the position of the point of the fastening receptacle closest to the base (B),
the tile being **characterized in that** the material thickness progressively decreases from the position (x₂₂) of the fastening receptacle to the position (x₂₀) of the groove.

2. The tile as claimed in the preceding claim, wherein the ratio (e₂₂/e₂₀) of the material thickness at said position (x₂₂) of the fastening receptacle (22) to the material thickness at said position (x₂₀) of the groove is greater than 1.2.

3. The tile as claimed in the preceding claim, wherein the ratio (e₂₂/e₂₀) of the material thickness at said position (x₂₂) of the fastening receptacle (22) to the material thickness at said position (x₂₀) of the groove is greater than 2.

4. The tile as claimed in any one of the preceding claims, wherein, at said position (x₂₀) of the groove, said material thickness (e₂₀) is less than 30 mm.

5. The tile as claimed in any one of the preceding claims, wherein, at said position (x₂₂) of the fastening housing (22) and/or at said position (x₂₀) of the groove, said material thickness (e₂₂, e₂₀) is greater than 5 mm.

6. The tile as claimed in any one of the preceding claims, wherein said material thickness (e₂₂) is maximal at the position (x₂₂) of the fastening housing (22).

7. The tile as claimed in the preceding claim, wherein said material thickness is maximal only at the position (x₂₂) of the fastening housing.

8. The tile as claimed in any one of the preceding claims, having one of said non-zero material thicknesses (e(M)) at any position (x(M)) on a segment of said base (B) representing more than 70% of the length of said base.

9. The tile as claimed in any one of the preceding claims, wherein said material thickness increases as the position, along the base (B), approaches the position (x₂₂) of the fastening receptacle (22).

10. The tile as claimed in any one of the preceding claims, wherein said transverse profile develops, along said base, without a break in the slope.

11. The tile as claimed in any one of the preceding claims, wherein said transverse profile is strictly convex over more than 80% of the width of the tile.

12. The tile as claimed in any one of the preceding claims, comprising a single fastening receptacle and exactly two grooves extending on either side of the fastening receptacle, said transverse profile is symmetrical with respect to the median longitudinal plane (Pm) of the tile.

13. The tile as claimed in any one of the preceding claims, the cold face having a longitudinal bevel (26) along each of the longitudinal edges thereof and/or a transverse bevel (27) along each of the transverse edges thereof.

14. The tile as claimed in any one of the preceding claims, said transverse profile being in any transverse section plane of a fraction of the tile included between two transverse planes separated by a distance, along the direction of the length of the tile, representing more than 50% of the length of the tile, with the length of the tile being defined by the general direction of the groove (20).

15. The tile as claimed in any one of the preceding claims, wherein the hot face has, in the median longitudinal plane (Pₘ), preferably in any longitudinal plane, a longitudinal profile configured so that the material thickness between the base plane of the hot face (P₁₂) and said longitudinal profile is maximal at the position of the transverse plane that passes through the position (x₂₂) of the fastening receptacle (22), the median longitudinal plane being the longitudinal plane at the mid-width of the tile, with a longitudinal plane being a plane perpendicular to the direction of the width of the tile, the base plane of the hot face being the plane in which the contour externally defining the hot face extends.

16. The tile as claimed in the preceding claim, wherein the material thickness between the base plane of the hot face (P₁₂) and the hot face is maximal at the position of the fastening receptacle.

17. A furnace, preferably a furnace for incinerating household waste or biomass, comprising a combustion chamber internally lined with:
- a plurality of energy recovery tubes (2); and
- an assembly of refractory tiles (10) suspended from anchors rigidly connected to said tubes and arranged so as to protect said tubes;
said assembly comprising a tile as claimed in any one of the preceding claims.
